# EUROPÄISCHE PATENTSCHRIFT

(11) **EP 1 982 112 B1**
(45) Veröffentlichungstag und Bekanntmachung des Hinweises auf die Patenterteilung: **13.09.2017**
(21) Anmeldenummer: 07702874.4
(22) Anmeldetag: 18.01.2007
(51) Int. Cl.: F23G 5/50

(54) **VERFAHREN ZUR PRIMÄRSEITIGEN STICKOXIDMINDERUNG IN EINEM ZWEISTUFIGEN VERBRENNUNGSPROZESS**
METHOD OF REDUCING NITROGEN OXIDE ON THE PRIMARY SIDE IN A TWO-STAGE COMBUSTION PROCESS
PROCEDE DE REDUCTION PRIMAIRE D'OXYDE D'AZOTE DANS UN PROCEDE DE COMBUSTION EN DEUX ETAPES

(30) Priorität: 07.02.2006 DE 102006005464
(43) Veröffentlichungstag der Anmeldung: 22.10.2008
(73) Patentinhaber: Karlsruher Institut für Technologie, 76131 Karlsruhe (DE)
(72) Erfinder: HUNSINGER, Hans, 76356 Weingarten (DE)
(86) Internationale Anmeldenummer: PCT/EP2007/000441
(87) Internationale Veröffentlichungsnummer: WO 2007/090510

(56) Entgegenhaltungen:
- EP-A- 1 382 906
- WO-A-99/58902
- US-A- 5 313 895

## Beschreibung

Die Erfindung betrifft ein Verfahren zur primärseitigen Minderung der Stickoxidbildung (NOx) und gleichzeitiger Vermeidung von Distickstoffoxid (N₂O) und Ammoniak-Schlupf (NH₃) im Abgas eines zweistufigen Verbrennungsprozesses umfassend eine von einem sauerstoffhaltigen Primärgas durchströmten Festbettausbrandzone und einer nachgeschalteten Abgasausbrandzone in die zusätzlich sauerstoffhaltiges Sekundärgas eingebracht wird, gemäß des ersten Patentanspruchs. Die Erfindung dient zudem einer Verbesserung der Schlackequalität über eine Minderung der Chloridkonzentration in der Rostasche.

Bei Verbrennungsprozessen, insbesondere in Rostfeuerungsanlagen ist die thermische Stickoxidbildung (NOx -Bildung) aus dem Luftstickstoff aufgrund des relativ niedrigen Temperaturniveaus vernachlässigbar klein. Beim Verbrennen von stickstoffhaltigen Brennstoffen in diesen Feuerungsanlagen werden Stickoxide im Wesentlichen aus dem im Brennstoff gebundenen Stickstoff gebildet.

Der Abbrand fester Brennstoffe wie Abfall, Biomasse oder Kohle auf Verbrennungsrösten kann idealisiert in die nacheinander ablaufenden Teilprozesse Trocknung, Entgasung und Abbrand des fixen Kohlenstoffes gegliedert werden. In technischen Rostfeuerungen überlagern sich diese Teilprozesse. Während der Entgasungsphase werden neben den Kohlenwasserstoffen auch die primär aus dem Brennstoffstickstoff gebildeten Stickstoffverbindungen insbesondere NH₃ (Ammoniak)und HCN (Blausäure) ins Abgas freigesetzt. Die Konzentration an Kohlenwasserstoffen im Abgas unmittelbar oberhalb des Rostes ist vor allem im Bereich der Hauptbrennzone der Verbrennungsanlage so hoch, dass die dort lokal über die Primärluft zugeführte Sauerstoffmenge nicht ausreicht, um einen vollständigen Abgasausbrand zu bewirken. Das aus dem Brennbett austretende Abgas in dieser Zone zeigt hohe Abgastemperaturen und ist praktisch sauerstofffrei. Unter diesen Bedingungen wird über Vergasungsreaktionen Kohlenmonoxid (CO) und Wasserstoff (H₂) gebildet. Folglich werden in diesem Bereich auch die höchsten Konzentrationen an heizwertreichen Abgaskomponenten wie Kohlenwasserstoffe, Kohlenmonoxid oder Wasserstoff zusammen mit den primär aus dem Brennstoffstickstoff gebildeten Stickstoffspezies hauptsächlich Ammoniak (NH₃) und Blausäure (HCN) und in sehr viel geringeren Mengen stickstoffhaltige organischen Verbindungen wie z.B. Pyridin und Anilin gefunden.

Üblicherweise wird bei einer vorgenannten, auf einen Sauerstoffmangel zurückzuführenden unvollständigen Verbrennung durch die Zugabe von Sekundärluft in das noch heizwertreiche Abgas eine Nachverbrennung eingeleitet. Dabei kommt es lokal zu sehr hohen Temperaturspitzen, wobei aus den eingangs genannten NH₃- und HCN-Verbindungen unter den oxidierenden Bedingungen während des Abgasausbrandes über komplexe Reaktionen letztendlich NO oder N₂ gebildet wird. Ziel ist die Steuerung dieses Prozesses in der Weise zu modifizieren, dass die primären Stickstoffspezies NH₃ und HCN vollständig abgebaut werden und als Endprodukt bevorzugt N₂ zu Lasten einer Stickoxidbildung entsteht und gleichzeitig eine Bildung von N₂O vermieden wird.
[1] offenbart die Abhängigkeit der Abbrandgeschwindigkeit beim Feststoffabbrand als Funktion der Primärluftmenge. Abhängig von Brennstoffeigenschaften, insbesondere vom Heizwert zeigt die Abbrandgeschwindigkeit ein Maximum bei einer bestimmten Primärluftmenge. Eine weitere Erhöhung der Primärluftmenge über dieses Maximum hinaus bewirkt dagegen eine Kühlung des Brennbetts. Die mit der Abkühlung verbundene verminderte oder verzögerte Freisetzung von flüchtigen Anteilen aus dem Brennstoff sowie die Verdünnung der Verbrennungsgase mit der zugeführten Primärluft führt zu einer verminderten lokalen Freisetzung und damit zu einer verminderten Konzentration von Kohlenwasserstoffen, CO und H₂.
[2] und [3] offenbaren diese Maßnahme in Verbindung mit dem zusätzlichen Nachweis, dass eine hohe Primärluftzufuhr bei gleichzeitiger niedriger Sekundärluftzufuhr (konstante Summe von Primär-und Sekundärluft) grundsätzlich zu niedrigen NO-Werten in den Verbrennungsabgasen führen.

Eine Wassereindüsung zur Minderung der PCDD/F Bildung in Abfallverbrennungsanlagen wird in **[4]** vorgeschlagen. Als Vorteil wird auch eine Minderung der NOₓ Bildung infolge der durch die Wassereindüsung verursachten Temperaturabsenkung postuliert. Alle in **[4]** aufgeführten Abgastemperaturen beziehen sich auf den Bereich vor Eintritt in die Abgasausbrandzone und liegen zwischen 800 und 950° bzw. 970°C. Detaillierte NOₓ Werte und NOₓ Minderungsraten sind leider nicht erwähnt. Auch sind keinerlei Angaben zu anderen N-haltigen Schadstoffen insbesondere N₂O und NH₃ aufgeführt.

Eine Absenkung der Abgastemperaturen nach Verlassen der Abgasausbrandzone (Sekundärbrennzone) auf unter 950°C führt jedoch zu einem unvollständigem Abbau des primär gebildetem NH₃ (Ammoniak) und zusätzlich zu einer Bildung von N₂O (Lachgas), die, wenn sie nicht im Rahmen von zusätzlichen Verfahrensschritten z.B. mit Katalysatoren, als starke Treibhausgase in die Atmosphäre entweichen.

Die in **[4]** vorgenannte Temperaturabsenkung durch Wasserzugabe auf 800-950°C führt jedoch auch bei einer nachgeschalteten Wärmenutzung z.B. zum Aufheizen eines Kessels zu einer Leistungsminderung.

Den gleichen Effekt erreicht man durch Befeuchten des Brennstoffes was zu einer Verminderung des Brennstoff-Heizwertes führt. Das Maximum der Abbrandgeschwindigkeit wird schon bei kleinen Primärluftmengen überschritten. Der Feststoffabbrand erstreckt sich über einen langen Rostbereich, wobei sich sowohl die Gasheizwerte als auch die Abgastemperaturen vor Eintritt in die Abgasausbrandzone auf einem niedrigen Niveau einstellen. Auch hier stellen sich die zuvor beschriebenen Effekte ein.

Ausgehend davon ist es **Aufgabe der Erfindung,** ein einfaches und zuverlässig kontrollierbares Verfahren zur primärseitigen Minderung von stickstoffhaltigen Schadstoffen insbesondere einer Stickoxidbildung in technischen Feuerungen, beispielsweise Rostfeuerungen mit erheblich höherer Effizienz vorzuschlagen. Hierbei ist von besonderer Bedeutung dass durch das Verfahren keine Bildung von anderen Schadstoffen wie z.B. N₂O und die Vermeidung von NH₃ Schlupf und/oder keine signifikante Minderung bei der energetischen Nutzung des Wärmeinhaltes der Verbrennungsabgase sowie keine Minderung bei der Schlackequalität eintritt.

Die Aufgabe wird mit einem Verfahren mit den Merkmalen des ersten Patentanspruchs gelöst. Vorteilhafte Ausgestaltungen des Verfahrens finden sich in den Unteransprüchen wieder.

Zur Lösung der Aufgabe wird ein Verfahren zur primärseitigen Minderung der Stickoxidbildung in einem zweistufigen Verbrennungsprozess, d.h. mit einer Festbettausbrandzone und einer nachgeschalteten Abgasausbrandzone im Abgasabzug vorgeschlagen. Dabei findet die eigentliche Verbrennung des festen Brennstoffs in der Festbettausbrandzone statt, während in der Abgasausbrandzone eine Nachverbrennung der unvollständig verbrannten Abgasbestandteile stattfindet. Üblicherweise wird bei derartigen Verbrennungsprozessen ein sauerstoffhaltiges Primärgas in die Festbettausbrandzone und ein ebenfalls sauerstoffhaltiges Sekundärgas zur Nachverbrennung in die Abgasausbrandzone eingegeben.

Wesentlich bei der Erfindung ist eine gezielte Minderung des Heizwertes der Verbrennungsgase vor Eintritt in die Abgasausbrandzone, und zwar in der Weise, dass hierdurch zwar eine signifikante Minderung der Stickoxidbildung realisiert wird, andererseits aber die Abgastemperatur auch lokal nicht gleichzeitig so weit abgesenkt wird, dass eine Bildung von Schadstoffen wie z.B. N₂O und ein unvollständiger Abbau von NH₃ hervorgerufen wird. Hierfür ist die exakte Einhaltung eines bestimmten Zustands des Abgases unbedingt erforderlich. Einerseits darf das Abgas oder auch nur Teile davon zur Begrenzung der Stickoxidbildung einen bestimmten Grenzheizwert, vorzugsweise 1,5 MJ/m³, weiter bevorzugt 1,0 MJ/m³ nicht überschreiten, andererseits darf die Abgastemperatur bis nach Verlassen der Abgasausbrandzone nicht unter 1000 °C, vorzugsweise unter 980 °C, weiter bevorzugt 950°C abfallen, und zwar zur Begrenzung von N-haltigen Schadstoffen insbesondere N₂O und NH₃ nicht nur integral, sondern auch in bestimmten Bereichen. Insofern ist es nicht nur von entscheidender Bedeutung, Heizwert und Temperatur des Abgases durch geeignete Maßnahmen gezielt zu regeln oder einzustellen, sondern auch durch diese Maßnahmen auch gezielt zu homogenisieren.

Eine Möglichkeit stellt die Eindüsung eines Gas-Wasser-Gemisches vor der Abgasausbrandzone dar. Hierbei kommt es zu einer gezielten Verminderung des Heizwertes des Abgases unmittelbar nach der Festbettverbrennung (auf dem Brennbett) mit gleichzeitiger Homogenisierung der Gase zwischen Brennbett und Abgasausbrandzone, d.h. nicht des Heizwertes des festen Brennstoffs an sich. Die Eindüsung erfolgt bevorzugt durch einen Freistrahl, der sich durch einen geringeren Volumenstrom einerseits und einer hohen Geschwindigkeit auszeichnet.

Die Eindüsung eines Gas-Wasser-Gemisches greift somit in vorteilhafter Weise direkt an den Heizwert des Abgases und nicht am festen Brennstoff selbst an, und zwar nicht nur hinsichtlich einer Heizwertminderung, sondern auch hinsichtlich einer Heizwerthomogenisierung.

Ein hoher Heizwert des Abgases in einem Bereich unmittelbar oberhalb des Brennbetts korreliert nämlich mit der Höhe einer Stickoxidbildung. Dabei bewirken sowohl Maxima als auch eine breite Verteilungen dieser Maxima der axialen Konzentrationsprofile von den heizwertreichen Abgaskomponenten CₙHₘ (Kohlenwasserstoffe), CO und H₂, d.h. ein hoher integraler Mittelwert über der Rostlänge die genannte hohe NO-Bildungsrate. Insofern beschreibt die vorliegende Erfindung eine geeignete technische Maßnahme, um den Heizwert des Abgases vor einem Abgasausbrand sowohl zu mindern als auch zu homogenisieren, dadurch die Maxima und die Breite der Verteilung drastisch zu reduzieren und damit die NO-Bildung zu minimieren.

Findet der Verbrennungsprozess in einer Rostfeuerungsanlage statt, durchläuft der Brennstoff auf einem Rost als Brennbett kontinuierlich die gesamte Festbettausbrandzone, die sich in einzelne hintereinander angeordnete Festbettbereiche unterteilt. Die zuerst vom Brennstoff durchlaufenden Festbettbereiche stellen die vordere Rosthälfte, während der Brennstoff mit fortschreitender Verbrennung in nachfolgende Festbettbereiche der hintere Rosthälfte und von dort zu einem Auslass für die festen Verbrennungsrückstände transportiert wird. Die Festbettausbrandzone ist dabei in einer Brennkammer angeordnet, wobei jeder der Brennbettbereiche mit einer individuellen Zufuhr des Primärgases ausgestattet ist. Eine Zufuhr eines sauerstoffhaltigen Sekundärgases erfolgt in die Abgasausbrandzone vorzugsweise in einem gemeinsamen Abgasabzug für alle Brennbettbereiche. Die Eindüsung des Wasser-Gas-Gemisches erfolgt in einem Freistrahl direkt in das Verbrennungsgas oberhalb der Brennbettoberfläche in die Brennkammer, d.h. vor der Abgasausbrandzone, wobei der Strahl alle Brennbettbereiche axial durchdringt und die Brenngase unmittelbar nach der Entstehung erfasst und vermischt.

Als Wasser-Gas-Gemisch eignen sich grundsätzlich alle Gemische aus Wasser oder wässrigen Lösungen mit einem Gas wie beispielsweise ein Wasser-Luft-, ein Wasser-Abgas- oder ein Wasser-Wasserdampf-Gemisch. Wässrige Lösungen können im Rahmen dieser Erfindungen auch gelöste rezirkulierte Schadstoffe aus anderen Abreinigungsmaßnahmen (z.B. aus Abreinigungswäschern) enthalten.

Die Eindüsung des Wasser-Gas-Gemisches erfolgt kontinuierlich oder gepulst und mit einer hohen Geschwindigkeit bzw. Impulsstärke, so dass der Strahl den Gasraumes oberhalb der Brennbettoberfläche über alle Rostzonen axial durchdringt. Für die Erzeugung des Strahls bietet sich der Einsatz von Zweistoffdüsen an, mit einem Strahlwinkel kleiner 15°, vorzugsweise zwischen 3 und 10°.

Grundsätzlich können aber auch die Wasser- und die Gasanteile separat über jeweils eigene Einstoffdüsen eingestrahlt werden, wobei in Hinblick auf die vorgenannte Homogenisierung der Brenngase ein Aufeinandertreffen und eine Mischung der beiden Einstoffstrahlen untereinander und mit den Brenngasen im Brennraum durch eine entsprechende Auslegung der Eindüsung zu gewährleisten ist.

Der über den Strahl eingedüste Gasanteil des Wasser-Gas-Gemisches sollte 10% der gesamten eingebrachten Verbrennungsluftmenge, welche sich im Wesentlichen aus dem Primärluftstrom und dem Sekundärluftstrom zusammensetzt, nicht übersteigen. Ein höherer Anteil bewirkt beispielsweise eine erhöhte Staubfreisetzungsrate ins Abgas. Eine grundsätzliche Begrenzung gilt auch für den eingebrachten Massenstrom der wässrigen Anteile. Ein zunehmend großer Massenstrom führt nämlich zu einer zunehmend hohen Abkühlung der Brenngase und ab einer bestimmten Höhe zu einer Beeinträchtigung oder gar zu einer Auslöschung des Abgasabbrandes. Das Abkühlen der Brenngase durch Wasserzugabe führt generell zu einer verminderten energetischen Nutzung der Abgaswärme bei der Dampferzeugung und ist daher möglichst gering zu halten.

Die Temperaturen vor der Abgasausbrandzone sollen immer oberhalb von 970°C bzw. nach der Abgasausbrandzone oberhalb von 950°C liegen, so dass keine unerwünschten Schadstoffe wie das Treibhausgas N₂O oder ein Schlupf von primär gebildetem NH₃ im ausgebrannten Abgas auftreten.

Unterhalb einer Temperatur nach der Abgasausbrandzone von 950°C steigt mit abnehmender Temperatur die N₂O Konzentration exponentiell an. N₂O ist ein starkes Treibhausgas und ist daher zu vermeiden. Oberhalb von 950°C ist auch gewährleistet, dass das primär gebildete NH₃ in der Abgasausbrandzone praktisch vollständig abgebaut wird.

Vorzugsweise wird die über den Strahl zuzuführende Wassermenge durch die geforderte NO-Konzentration im Abgas nach der Abgasausbrandzone (z.B. gesetzliche Grenzwerte), d.h. indirekt über die gemittelte Temperatur des Brenngases (Abgas) nach der Abgasausbrandzone im Brennraum bestimmt und geregelt. Eine Mindesttemperatur im Abgas nach der Abgasausbrandzone von 950°C begrenzen dabei den Massenstrom von Wasser nach oben.

Eine weitere alternative oder zusätzliche Maßnahme zur Absenkung des Abgasheizwertes bei gleichzeitiger Sicherstellung einer der vorgenannten Mindestabgastemperaturen umfasst eine Einstellung der Primärgaszufuhr in der Weise, dass sich eine Verbrennungsstöchiometrie in der Primärbrennzone zwischen 0,6 und 1,2, vorzugsweise kleiner 1,0 weiter bevorzugt zwischen 0,7 und 0,9 einstellt. Die Mindestverbrennungsluftmenge und die Primärluftmenge kann aus der Abgaszusammensetzung (z.B. CO₂, O₂, H₂O) und Abgasmenge näherungsweise berechnet werden.

Alternativ hierzu umfasst eine weitere Maßnahme für den vorgenannten Zweck eine gezielt einstellbare und/oder regelbare Transportgeschwindigkeitseinstellung im Brennbett, wobei in einer vorderen Rosthälfte eine wesentlich, vorzugsweise um mindestens 50% höhere Transportgeschwindigkeit als in der hinteren Rosthälfte vorliegt, wobei die Verweilzeit des Feststoffes (Brennstoff) auf dem Rost so bemessen ist dass ein Ausbrand der Rostasche zu über 99% erfolgt. Grundgedanke dieser Maßnahme ist es, die bei der Verbrennung eines Brennguts auf einem Festbett entstehende Abgasemission so zu steuern und über die Brennbettfläche so zu verteilen, dass das Abgas oberhalb eines jeden Brennbettbereiche einen niedrigen Heizwert aufweist. Insofern wird mit dieser Maßnahme die Freisetzung von heizwertreichen Gasen über einen größeren Rostbereich verteilt und somit der Maximalwert des axialen Abgasheizwertprofils oberhalb des Brennbettes deutlich reduziert. Diese räumliche Ausdehnung der Freisetzung von heizwertreichen Gasen bewirkt einen verbesserten Gasausbrand bereits im Brennbett mit der zugeführten Primärluft da lokal mehr Sauerstoff zur Oxidation zur Verfügung steht (größerer Rostbereich - m³Luft/m²Rostfläche = konstant)und bewirkt somit auch eine Absenkung des integralen Mittelwertes des axialen Heizwertprofils.

In allen Fällen korrelieren niedrige Heizwerte im Abgas (bezogen auf Mittelwert und Maximalwert des Abgasheizwertprofils im Durchströmungsquerschnitt) zwischen Brennbettoberfläche und vor der Sekundärluftzugabe grundsätzlich mit niedrigen NOₓ Emissionswerten. Daher sind generell niedrige Gasheizwerte vor Sekundärluftzugabe anzustreben, wobei mit den vorgeschlagenen vorgenannten Maßnahmen jeweils allein oder in Kombination miteinander eine niedrige Staubfreisetzung aus dem Brennbett sowie einen guter Schlacke- und Abgasausbrand sicherstellen. Damit sind insbesondere niedrige NOₓ-Emissionswerte ohne einen signifikanten Anstieg einer N₂O-Bildung erzielbar, wobei durch das Fehlen eines Schlupfs von primär gebildetem NH₃ ausreichend hohe Temperaturen in der Abgasausbrandzone bei Sekundärluftzugabe bedingen.

Die Erfindung und seine vorteilhaften Ausgestaltungen erfüllen vorzugsweise die folgenden Rahmenbedingungen:
- Primärluftzahlen (Stöchiometrie) wird unter 1,0 vorzugsweise zwischen 0,7 und 0,9 eingestellt, zur Erzielung einer geringen Staubfreisetzung.
- Sekundärgas wird so eingestellt, dass nach Abgasausbrandzone ein Sauerstoffüberschuss abhängig von Brennstoffheizwert / Brennstofffeuchte von mindestens 6% vorzugsweise ca. 10% verbleibt.
- Die Gesamtverweilzeit des Brennstoffes auf dem Rost ist so bemessen, dass ein guter Schlackeausbrand gewährleistet ist, wobei eine größere Transportgeschwindigkeit in der vorderen Rosthälfte als in der hinteren Rosthälfte eingestellt wird.
- Die axiale Vermischung der Brenngase im Brennraum durch eine geringe Wasser/Luftmenge erfolgt vorzugsweise mit fein dispergiertem Wasser mittels Zweistoffdüse. Der Freistrahl aus einer Flüssigkeit/Gas-Mischung durchdringt mit einem hohen Impulsniveau den Brennraum in axialer Richtung (d.h. meist waagerecht und über alle Brennbettbereiche erstreckend). Hierdurch erfolgt eine Vermischung und Heizwertabsenkung des Abgases im Brennraum
- Die Wassermenge des Wasser-Gas-Strahls wird in Abhängigkeit der ermittelten, vorzugsweise gemessenen NOₓ-Konzentration im Abgas nach der Abgasausbrandzone oder nach dem Kessel geregelt.
- Die maximale Wassermenge wird durch die ermittelte, vorzugsweise gemessene Mindesttemperatur im Abgas von 950°C nach der Abgasausbrandzone begrenzt. Die Temperatur vor der Abgasausbrandzone darf dabei 970°C nicht unterschreiten.
- Der Verlust der für eine nachgeschaltete Wärmenutzung an einem Kessel erforderlichen Wärmemenge hält sich bei einer geringe Wasserzugabe, vorzugsweise unter 50 g/Nm³ weiter bevorzugt unter 30 g/Nm³ Abgas in Grenzen.

Die Erfindung wird im Folgenden anhand von Ausführungsbeispielen und den nachfolgend genannten Figuren näher erläutert. Es zeigen
**Fig.1** einen Querschnitt einer herkömmlichen Rostfeuerungsanlage mit vier Brennbettbereichen **P₁** bis **P₄,**
**Fig.2a** **bis f** die gemessenen axialen Konzentrationsprofile von O₂, CO₂, H₂O, CO, organischen Kohlenstoffverbindungen (Summe S organ. C) und H₂ im Abgas oberhalb des Brennbettes einer herkömmlichen Rostfeuerungsanlage,
**Fig.3a** **und b** gemessene Stickoxidkonzentrationen **10** im Brennbett in Abhängigkeit der Abgasheizwerte **11** und **12** (a) bzw. der Stöchimetrie **17** (Primärluftzahl) und Rostvorschubgeschwindigkeit **18** (b),
**Fig.4** Messwerte zur Lachgaskonzentration (N₂O) **19** und Stickoxidkonzentration (NO) **10** im Abgas in Abhängigkeit der Abgasaustrittstemperatur **20** aus der Abgasausbrandzone,
**Fig.5** einen Querschnitt einer Rostfeuerungsanlage mit vier Brennbettzonen und einer Zweistoffdüse,
**Fig.6** die im Rahmen einer Versuchskampagne ermittelten Stickoxidkonzentrationen im Abgas einer Rostfeuerungsanlage gemäß **Fig.5****,**
**Fig.7a** **und b** die Stickstoff- und Lachgaskonzentrationen im Abgas in Abhängigkeit der Abgastemperatur nach der Abgasausbrandzone sowie
**Fig.8a** **bis c** die im Rahmen des Versuchsbeispiels 4 ermittelten Verläufe der Wasserkonzentration, der Stickoxidbildung, der Lachgasbildung sowie der Temperaturverteilungen oberhalb des Brennbettes in Abhängigkeit der Zeit.

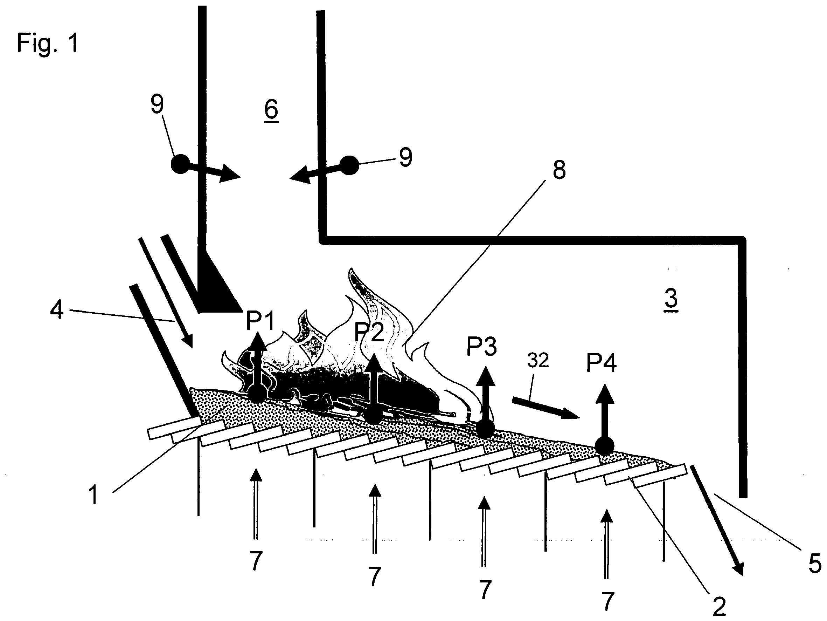

Eine herkömmliche Rostfeuerungsanlage, wie sie in **Fig.1** dargestellt ist, besteht im Wesentlichen aus einem Brennbett **1** auf einem Feuerungsrost **2** in einer Brennkammer **3** mit einen Einlass **4** für Brennstoff, einem Auslass **5** (vgl. Brennstofftransportrichtung **32**) für Schlacke oder andere festen Verbrennungsprodukte sowie einer der Brennkammer nachgeschalteten Abgasausbrandzone **6** im Abgasabzug. Das Brennbett **1** besteht im Wesentlichen aus einem festen Brennstoff. Die Brennkammer **3** überdeckt alle Brennbettbereiche **P₁** bis **P₄,** die vom Brennstoff im Brennbett seriell durchlaufen werden und jeweils durch den Rost mit einer individuellen sauerstoffhaltigen Primärgaszufuhr **7** pro Brennbettbereich durchströmt werden. **P₁** und **P₂** bilden dabei die vordere, **P₃** und **P₄** die hintere Rosthälfte. Die vorgenannte sauerstoffhaltige Sekundärgaseindüsung **9** findet in der nachgeschalteten Abgasausbrandzone **6** im Abgasabzug statt.

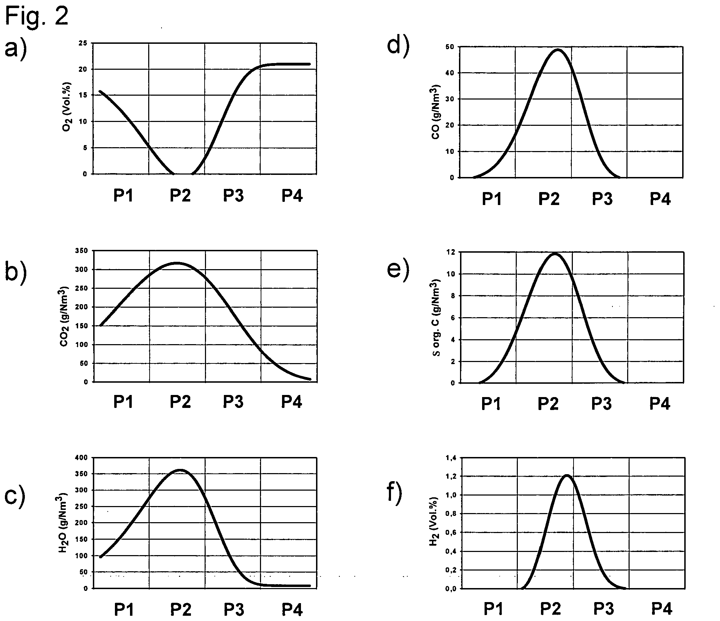

Der Ort der Verbrennung **8** des festen Brennstoffes (in **Fig.1** nur mit einer symbolischen Flamme dargestellt) findet im Wesentlichen im Bereich des Brennbetts **P₂** statt, wobei in den Brennbettbereichen **P₁** bis **P₄** naturgemäß unterschiedliche, insbesondere auf den Verbrennungsfortschritt und der Temperatur des Brennstoffs zurückzuführende Verbrennungszustände bestehen. **Fig.2a** **bis f** geben beispielhaft gemessene Konzentrationsprofile der Abgaskomponenten Sauerstoff O₂ **(a),** Kohlendioxid CO₂ **(b),** Wasser H₂O **(c),** Kohlenmonoxid **(d),** organische Kohlenwasserstoffverbindungen **(e)** sowie Wasserstoff H₂ **(f)** in der Brennkammer **3** unmittelbar oberhalb des Brennbetts **1,** aufgetragen über die Brennbereiche **P₁** bis **P₄** wieder. Bei der Verbrennung kommt es zu einer Entgasung der flüchtigen Brennstoffanteile, insbesondere Kohlenwasserstoffe CₙHₘ (vgl. **Fig.2e**)**.** Die Kohlenwasserstoffkonzentration im Abgas im Bereich der Hauptbrennzone (Brennbettbereich **P2)** ist dabei so hoch, dass der lokal zugeführte Sauerstoff **(****Fig.2a****)** nicht ausreicht, um einen vollständigen Abgasausbrand zu bewirken. Die Sauerstoffkonzentration sinkt dabei u. U. auf Null. Hier werden bevorzugt an dieser Stelle die höchsten Konzentrationen an heizwertreichen Abgaskomponenten CₙHₘ, CO und Wasserstoff **(****Fig.2d, e und f****)** gefunden, und zwar gemeinsam mit den primären Stickstoffspezies (NH₃, HCN und geringen Mengen an stickstoffhaltigen Kohlenwasserstoffen). Wasser **(****Fig.2c****)** wird durch Verdampfung oder Trocknung bzw. wird durch die teilweise Verbrennung von Kohlenwasserstoffen gebildet und tritt bevorzugt im Bereich vor und bis in die Hauptverbrennungszone aus dem Brennbett aus und sinkt in nachfolgenden Brennbettbereichen **(P₄)** auf ein Minimum ab. Kohlendioxid **(****Fig.2b****)** entsteht mit der Verbrennung in allen Brennbettbereichen ungefähr proportional mit der Abbrandintensität.

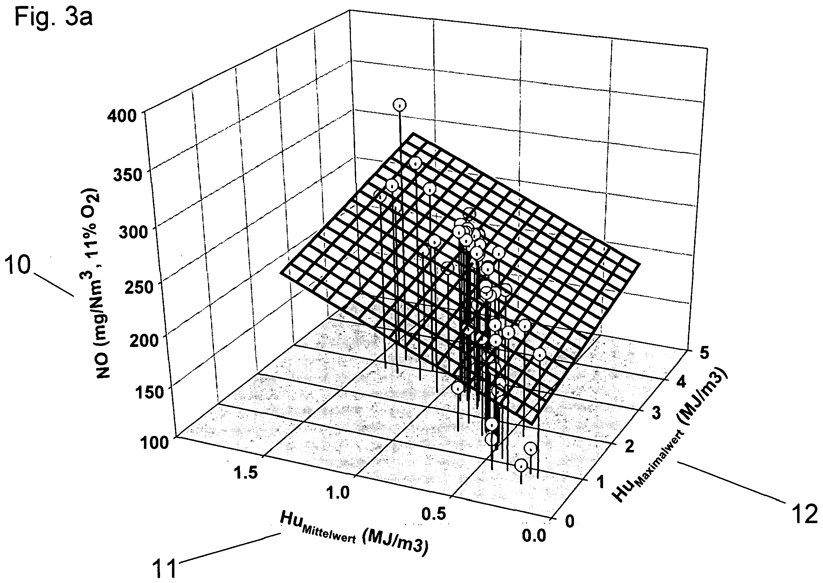

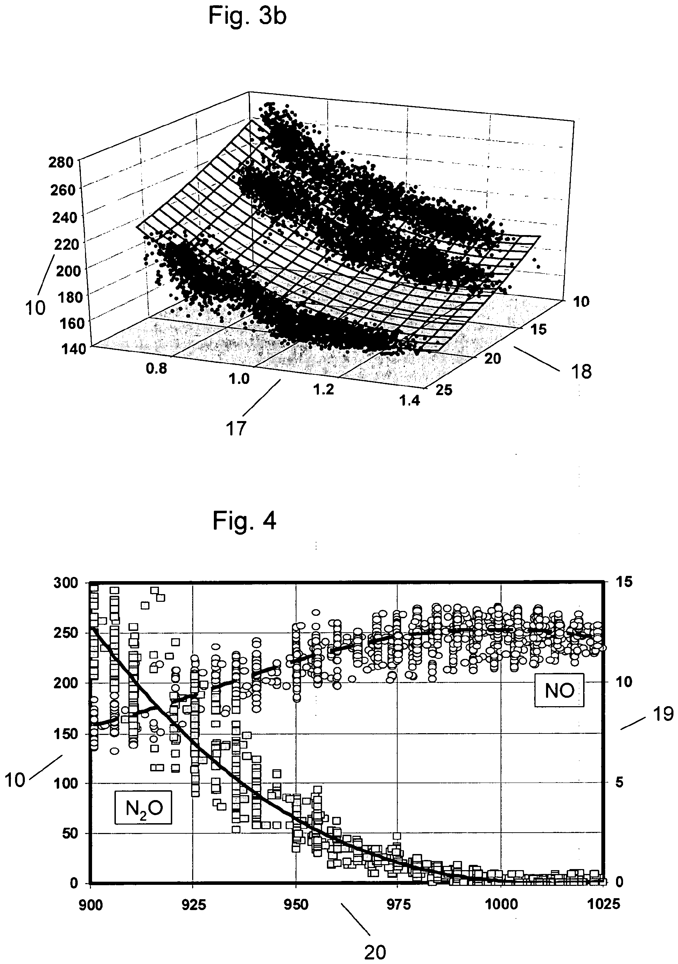

Die **Fig.3a** **und b** geben je ein an einer Müllverbrennungs-Versuchsanlage (TAMARA) ermitteltes Kennfeld der Stickoxidkonzentration **10** im Abgas nach dem Kessel (in mg/Nm³, normiert auf 11% O₂) als Funktion von verschieden Einflussfaktoren wieder. Die Abgastemperaturen in **Fig. 3b** nach Abgasausbrandzone (nach Sekundärluftzugabe) waren in beiden Fällen konstant auf ca. 1050°C ± 40°C eingestellt.

Basierend auf einer großen Anzahl von Experimenten mit unterschiedlichen Feuerungsparametern wie Heizwert des festen Brennstoffes, Primärluftzahl und Rostkinematik gibt **Fig.3a** ein Kennfeld der Stickoxidkonzentration **10** im Abgas nach dem Kessel (in mg/Nm³, 11% O₂) als Funktion der Abgasheizwerte über dem Brennbett wieder, und zwar sowohl über den mittleren Heizwert Hu_{Mittelwert} **11** (in MJ/m³), d.h. über die Rostlänge gemittelt (integraler Mittelwert), wie auch über den maximalen Heizwert Hu_{Maximalwert} **12** (in MJ/m³). Alle Feuerungsparameter beeinflussen die axialen Gasheizwertprofile oberhalb des Brennbettes. Die Maximalwerte und Breite der Gasheizwertprofile korrelieren mit den NOₓ Konzentrationen. Die niedrigsten NO-Werte werden bei niedrigen mittleren und niedrigen maximalen Heizwerten beobachtet. Ziel ist es daher, mit geeigneten Maßnahmen niedrige Gasheizwerte im Abgas zwischen Brennbettoberfläche und vor der Sekundäreindüsung einzustellen.

**Fig.3b** gibt das Kennfeld der Stickoxidkonzentration **10** im Abgas nach dem Kessel (in mg/Nm³, 11% O₂) als Funktion der der Stöchiometrie (Primärlufzahl **17** dimensionslos) sowie der in allen Rostzonen gleich eingestellten Rostvorschubgeschwindigkeit **18** in cm/min (Hausmüll Hᵤ 7-8 MJ/kg). Auch dieses Kennfeld weist einen eindeutigen Bereich mit niedrigster Stickoxidkonzentration auf, wobei im Gegensatz zu dem in **Fig.3a** der Anstieg der Stickoxidkonzentration im dargestellten Kennfeld nicht linear sondern näherungsweise exponentiell erfolgt. Mit zunehmender Stöchiometrie erfolgt eine vorteilhaft zunehmende Absenkung der Stickoxidbildung. Stöchiometrien über 1,0 sollten aber wegen der in diesem Bereich unerwünscht ansteigenden Staubfreisetzung ins Abgas und der damit verbundenen Kesselverschmutzung bzw. erhöhtem Anfall von Flugaschen im Entstauber vermieden werden.

**Fig.4** gibt die bei der Verbrennung entstehende Lachgaskonzentration **19** (N₂O-Bildung in mg/Nm³, 11% O₂) in Abhängigkeit der Abgastemperatur **20** nach der Abgasausbrandzone in °C wieder. Unterhalb einer Grenztemperatur von ca. 950°C nach der Abgasausbrandzone ist grundsätzlich mit einem signifikanten Anstieg der Lachgaskonzentration zu rechnen. Bei einer Reduzierung des Abgasheizwertes zwecks Verminderung einer Emission von stickstoffhaltigen Schadstoffen gilt es daher, die Abgastemperatur nach der Abgasausbrandzone oberhalb der vorgenannten Grenztemperatur einzustellen, um die verminderte Emission von Stickstoffverbindungen und damit der im Abgas oder Brennstoff zurückgehaltene höhere Anteil an gebundenen Stickstoff nicht in eine erhöhte Lachgasemission umzulenken.

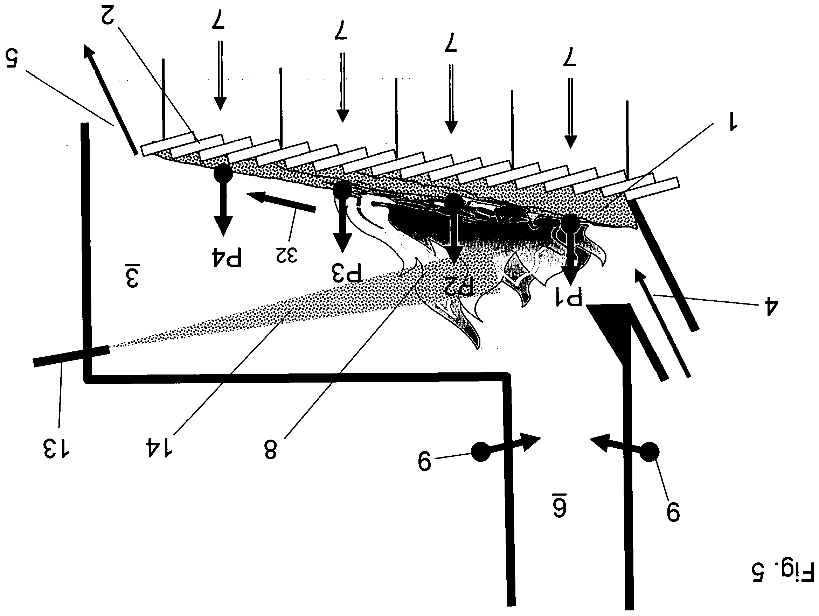

Die Reduzierung der Gasheizwerte im Abgas erfolgt im Rahmen der Erfindung durch entsprechende Einstellung der Luftverteilung / Rostkinematik und axiales Vermischen der Abgasströme aus den einzelnen Brennbettbereichen (Rostzonen) **P₁** bis **P₄** in der Brennkammer **3** vor der Sekundärgaszugabe **9** unter gleichzeitiger Zugabe von Wassertröpfchen. Technisch erfolgt dies im Rahmen des Ausführungsbeispiels nach **Fig.5****,** der Aufbau entspricht ansonsten der Bauform gemäß **Fig. 1****,** über eine Zweistoffdüse **13** mit einem Strahl **14** einen Wasser-Gas-Gemisch. Von der Rückseite des Brennraumes **3** ist die Zweistoffdüse **13** positioniert. Der Strahlwinkel ist vorzugsweise klein, d.h. unter 15°, vorzugsweise <10°. Unter hohem Druck wird ein kleiner Luftmengenstrom (maximal 10 % des Abgasdurchsatzes, typischerweise 12-15 Nm³/h bei einem Abgasdurchsatz oberhalb des Brennbettes von beispielsweise 400 Nm³/h) eingedüst. Durch das daraus resultierenden hohe Impulsniveau (Produkt aus Masse und Geschwindigkeit des Freistrahls) durchdringt der Freistrahl **14** die Brennkammer **3** und führt zu einer intensiven Vermischung von heizwertreichen und heizwertarmen Gasen aus den einzelnen Brennbett- oder Rostzonen innerhalb der Brennkammer im Bereich vor der Abgasausbrandzone **6** bei der Sekundärgaseindüsung **9.** Durch das Vermischen der sauerstofffreien und heizwertreichen Gase aus der Hauptbrennzone mit den sauerstoffreichen und heizwertarmen Gasen aus den Rostzonen vor und hinter der Hauptbrennzone erfolgt ein teilweiser Ausbrand der heizwertreichen Gaskomponenten bereits vor der Abgasausbrandzone. Die Effizienz hängt von der Primärluftzahl und von der Mischgüte ab. Durch den Ausbrand steigt die Feuerraumtemperatur an. Mit einer Zweistoffdüse **13** kann zusätzlich fein zerstäubtes Wasser in den Bereich der Verbrennung **8** zugeführt werden. Dadurch sinkt der Heizwert im Abgas, und zwar idealer Weise um die Verdampfungsenthalpie der Wassertröpfchen. Gleichzeitig wird dadurch die Temperatur nach der Abgasausbrandzone erniedrigt.

Der Prozess einer effektiven Vermischung in Verbindung mit einem minimalen Mengenstrom des eingegebenen Wasser-Gas-Gemisches ist durch Einstellung der Primärgasstöchiometrie, der Rostkinematik und die Positionierung der Zweistoffdüse, alternativ auch durch vorgenannte Einzeldüsen für Wasser und Gas oder mehrerer Freistrahldüsen individuell auf die Brennkammergeometrie optimierbar.

Die Erfindung wird im Folgenden anhand von Versuchsbeispielen näher erläutert:

### Versuchsbeispiel 1:

Die Versuche dieses Versuchsbeispiels dienten der Ermittlung der optimalen Feuerungsparameter.

Bei den Versuchen wurde Müll mit einem unteren Heizwert von Hu ca. 7 bis 8 MJ/kg in der vorgenannten Müllverbrennungs-Versuchsanlage TAMARA verbrannt. Der Sauerstoffgehalt im Abgas nach dem Kessel lag bei konstant ca. 10 Vol.% trocken, die Abgastemperaturen nach der Abgasausbrandzone ebenfalls konstant zwischen 1050 und 1100°C. Eine Verminderung der Primärluft wurde über eine entsprechend geregelte Anhebung der Sekundärluftzufuhr kompensiert, wobei der Sauerstoffüberschuss nach der Nachbrennkammer konstant gehalten wurde. Die Versuche wurden mit drei verschiedenen Rostgeschwindigkeiten durchgeführt. Die Ergebnisse sind in **Fig.3b** wiedergegeben.

Mit steigender Primärluftzahl **17** (Stöchiometrie) und/oder Rostvorschubgeschwindigkeit **18** sank die Stickoxidkonzentration **10** im Abgas (vgl. **Fig.3a**), aber auch den Heizwert der Verbrennungsabgase oberhalb des Brennbettes.. Insofern bewirkt eine weitere Erhöhung z.B. der Primärluftzahl im Bereich über 1,0 insbesondere bei großen Rostvorschubgeschwindigkeiten keine weitere Verminderung der Stickoxidbildung, jedoch eine unerwünscht hohe Staubfreisetzung ins Abgas. Primärluftzahlen über 1,0 sollten daher vermieden werden.

Eine große Rostvorschubgeschwindigkeit in allen Rostzonen bedeutet zugleich eine kurze Verweilzeit des festen Brennstoffes im Brennbett auf dem Feuerungsrost, wodurch sich auch die Schlackeausbrandqualität vermindert (Nachteil).

Weitere Untersuchungen zeigten, dass eine bevorzugte niedrige Stickoxidfreisetzungsrate insbesondere mit einer Erhöhung der Rostvorschubgeschwindigkeit in der vorderen Rosthälfte korreliert, wo eine Freisetzung der flüchtigen Bestandteile und der primären Stickstoffverbindungen NH₃ und HCN stattfindet. Die Rostgeschwindigkeit am Rostende hat keinen Einfluss auf die NOₓ Bildung. Die Rostgeschwindigkeit in der hinteren Rosthälfte korreliert insbesondere mit der Schlackeausbrandqualität. Der Brennstoff hat im hinteren Rostbereich mit abnehmender Rostvorschubgeschwindigkeit zunehmend Zeit für einen zunehmend vollständigen Ausbrand und damit zu einer zunehmenden Ausbrandqualität der Schlacke.

### Versuchsbeispiel 2

Wie im ersten Versuchsbeispiel erfolgte eine Verbrennung in der Versuchsanlage TAMARA. Die Brennstoffzufuhr wurde so eingestellt dass der brennbarer Anteil des Feststoffes konstant war, wodurch sich nach Verlassen der Abgasausbrandzone auch ein konstanter Sauerstoffanteil im Abgas zwischen 11 und 11,5 Vol.%trocken einstellte.

Die Minderung des Heizwertes des festen Brennstoffs von Hu_{Brennstoff} von 12 auf 6 MJ/kg erfolgte im Rahmen dieses Versuchsbeispiels durch Befeuchtung des Brennstoffs. Die konstante Fracht an brennbaren Bestandteilen (konstante Kohlenstofffracht)wurde durch eine entsprechend der Feuchtezunahme erhöhte Brennstoffdosierung kompensiert. Primärluftzahl wurde auf konstant ca. 1,0 eingestellt, ebenso die Rostvorschubgeschwindigkeit in allen Brennbettbereichen auf 10 cm/min.

Der Feststoffausbrand erfolgt bei Feuchtezunahme im Müll über einen größeren Bereich des Rostes und verschiebt sich stromabwärts. Gleichzeitig sinken die Feuerraumtemperaturen mit abnehmendem Heizwert des Brennstoffes Hu_{Brennstoff}. Der Heizwert des Abgases Hu_{Gas} oberhalb des Brennbettes sinkt parallel (sowohl integraler Mittelwert als auch Maximalwert des axialen Profils). Die gemessenen Lachgaskonzentration **19** (N₂O) und Stickoxidkonzentration **10** im Abgas sind nach Verlassen der Abgasausbrandzone sind in **Fig.4** über die an gleicher Stelle gemessenen Abgastemperatur **20** wiedergegeben. Die Temperatur im Abgas nach der Abgasausbrandzone sinkt mit Erhöhung des Wassereintrages. Dies bewirkt wie erwartet eine signifikante Minderung der NOₓ Bildung (Stickoxidkonzentration **10**). Unterhalb von ca. 950°C kommt es aber zu einem unerwünschten signifikanten Anstieg der Lachgaskonzentration **19.** Außerdem bewirkt eine Befeuchtung des Brennstoffes grundsätzlich eine Verlängerung der Ausbrandzeit des Brennstoffes auf dem Rost. Auch die Qualität der Schlacke nimmt infolge verminderter Temperaturen im Brennbett beim hohen Brennstofffeuchten ab. Daher ist eine Brennstoffbefeuchtung nicht empfehlenswert.

Eine Minderung der NOx Bildung durch Temperaturabsenkung im Abgas unterhalb von 950°C nach der Abgasausbrandzone wird mit einer stark ansteigenden Bildung von N₂O erkauft. Temperaturen im Abgas nach der Abgasausbrandzone unterhalb von 950°C sind somit zu vermeiden.

### Versuchsbeispiel 3

Hausmüll wird in der vorgenannten Versuchsanlage TAMARA verbrannt.

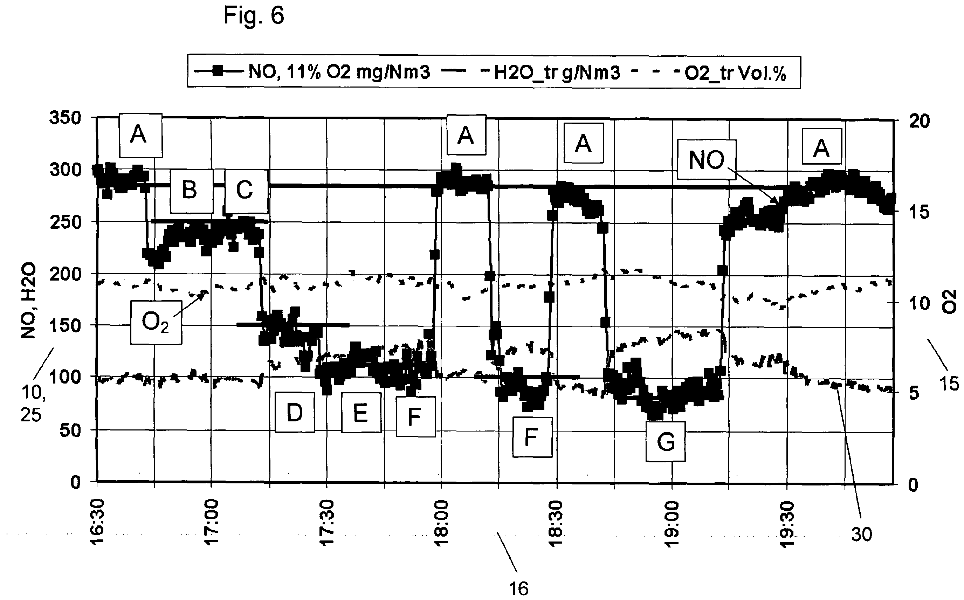

**Fig.6** gibt die experimentell in dieser Versuchskampagne ermittelten Stickoxidkonzentrationen **10** (NO) und Sauerstoffkonzentrationen **15** (O₂) im Abgas nach der Brennkammer wieder. Die Brennstoffzufuhr beträgt 200 kg/h (Hausmüll Hᵤ = 9-10 MJ/kg) und der Abgasstrom ca. 1000 Nm³/h. Die Stöchiometrie der Primärluft beträgt ca. 0.9 und die Rostgeschwindigkeit ca. 10 cm/min. Im Grundzustand **A** arbeitet die Verbrennungsanlage ohne eine Eindüsung eines Wasser-Gas-Gemisches in die Brennkammer, d.h. entsprechend einer Anlage nach **Fig.1****.** Die Zustände **B und C** stellen sich ein, wenn über die Zweistoffdüse lediglich Luft eingedüst wird, und zwar 12 Nm³/h bei 4 bar **(B)** bzw. 15 Nm³/h bei 5 bar **(C),** was ca. 1,5% des gesamten Abgasstroms entspricht. Bereits durch diese Maßnahme beobachtet man eine reduzierte Bildung von Stickoxiden in der Größenordnung von ca.17% (von ca.300 auf ca.250 mg/Nm³ NO), wobei dieser Wert nur unwesentlich durch den Druck- und die Luftmenge (innerhalb des vorgenannten Parameterbereiches) beeinflusst wird. Dies und die über die gesamte Kampagne konstante Menge an Sauerstoff lassen darauf schließen, dass die Reduzierung der Stickoxidbildung insbesondere durch die axiale Verwirbelung und damit durch die Homogenisierung der Brenngase über die vorgenannten Brennbettbereiche bewirkt wird.

Die wesentliche Reduzierung der Stickoxidbildungsrate, und zwar gegenüber dem Ausgangszustand **A** um bis zu 66% (von ca. 300 auf ca. 100 mg/Nm³ NO), erzielt man jedoch durch ein zusätzliches Eindüsen von Wasser (vgl. **Fig.5**). Ausgehend von den Lufteindüsungsparametern gemäß des Zustands **B** (12 Nm³/h bei 4 bar) wird über eine Zweistoffdüse zusätzlich 20 l/h (Zustand **D**), 30 l/h (Zustand **E**), 40 l/h (Zustand **F**) sowie 50 l/h (Zustand **G**) Wasser eingedüst. Gleichzeitig sinkt auch die Temperatur des Abgases nach der Abgasausbrandzone von mehr als 1000°C auf bis unter 900°C ab. Dabei stellte sich bei nach wie vor unveränderten Sauerstoffkonzentrationen mit zunehmendem Wasserstrom eine zunehmend geringere Stickoxidbildungsrate ein, wobei die Schritte der Reduzierung mit der absoluten Wassermenge immer geringer ausfallen. Das bedeutet dass nur noch geringe Steigerungen bei der NO-Minderung durch relativ hohe energetische Verluste erkauft werden. Mit einer wiederholten Unterbrechung des Freistrahls mit zwischenzeitlicher Einstellung des Zustands **A** konnte die Reproduzierbarkeit dieser Reduzierungsmaßnahme nachgewiesen werden (vgl. **Fig.6**). Die weitere Reduzierung der Stickoxidbildungsrate von Zustand **B** auf Zustand **D** bis **G** ist also allein auf die zusätzliche Heizwertreduzierung der Abgase bei gleichzeitiger Vermischung (hier: nicht des Festbrennstoffs) durch die Wasserdosierung zurückzuführen.

Die Wasserdosierung wird vorzugsweise über die Stickoxidkonzentration reguliert. Zur Vermeidung zu hoher Energieverluste im Abgas (Einschränkung einer nachgeschalteten Wärmenutzung) liegt die Wasserdosierung im Abgas unter 50g/m³, bevorzugt unter 30g/m³.

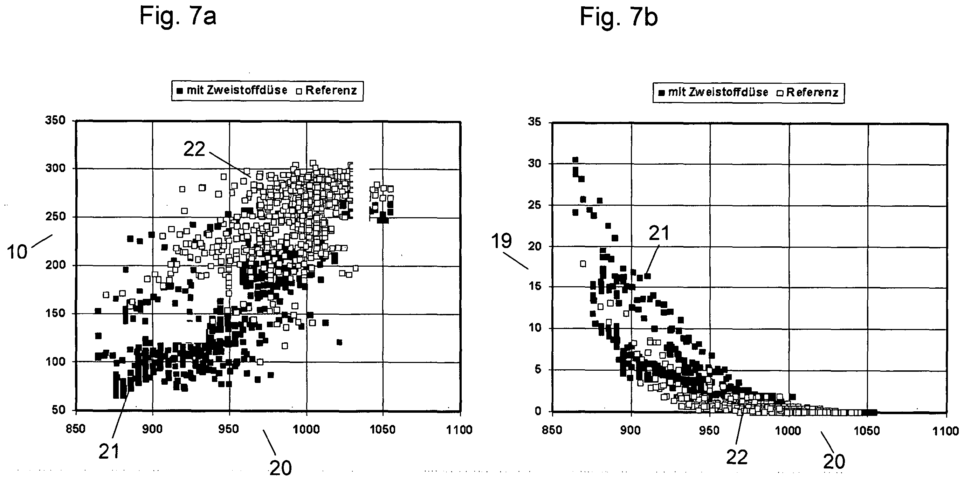

Bei hoher Wasserzugabe mit Zweistoffdüse (vgl. Messwerte mit Wasserzugabe **21**) erfolgt eine Temperaturabsenkung und im Vergleich der Messwerte ohne Wasserzugabe (Referenzmesswerte **22**) drastische Minderung einer NOₓ-Bildung (vgl. Stickoxidkonzentrationen **10** über die Abgastemperatur **20** in **Fig.7a**). Der Wassergehalt im Abgas nach der Abgasausbrandzone (d.h. auch nach dem Kessel) steigt dabei um bis zu 50 g/Nm³, wo hingegen die Temperatur nach der Abgasausbrandzone sinkt. Oberhalb von 950°C nach der Abgasausbrandzone wurde, wie auch in **Fig.7b** dargestellt keine N₂O Bildung (Lachgaskonzentration **19**) beobachtet. Die Bildung von N₂O unterhalb von 950°C ist nur von der Abgastemperatur **20** und nicht vom Wassergehalt selbst abhängig. Die Tendenz der Stickoxidbildung zeigt mit abnehmender Temperatur nach unten. Im Vergleich zu einer Referenzeinstellung Zweistoffdüse bewirken die Vermischung und Wasserzugabe vorzugsweise mit einer Zweistoffdüse bei gleicher Abgastemperatur nach der Abgasausbrandzone grundsätzlich eine geringere Stickoxidkonzentration (vgl. **Fig.7a**). Die Ursache hierfür liegt in der Minderung des Gasheizwertes oberhalb des Brennbettes vor der Abgasausbrandzone.

Nach der 17.BImSchV (Bundesimmissionsschutzverordnung) ist ein Emissionsgrenzwert von 200 mg/Nm³ (als NO₂ gerechnet bei einem Bezugssauerstoffgehalt von 11%O₂) zulässig, welcher mit dem vorgeschlagenen Verfahren deutlich unterschritten werden kann. Eine Verschlechterung des Abgasausbrands wurde nicht festgestellt, was über eine CO-Messung nachzuweisen war. Es wurden immer konstante Werte im Bereich von ca. 1 mg/Nm³ gemessen. Oberhalb einer Abgastemperatur von 970°C vor und 950°C nach Sekundärluftzugabe war kein N₂O nachweisbar.

Die beschriebene Maßnahme sollte mit weiteren Maßnahmen der Stickoxidminderung kombiniert werden, beispielsweise über eine Änderung der Primärluft/Sekundärluft Verteilung (vgl. **[2]** und **[3]**). Sehr vorteilhaft sind die Kombination von hohen Primärluftmengen (Primärluftstöchiometrien im Bereich von 0,6 bis 1 vorzugsweise im Bereich 0,7 bis 0,9 kombiniert mit hohen Transportgeschwindigkeiten des Brennbettes (d.h. oberhalb der vorgenannten 10 cm/min). Allein durch eine Kombination diese beiden Parameter lässt sich ohne Minderung der der energetischen Nutzung des Wärmeinhaltes des Abgases eine Minderung der NO Konzentration von ca. 280 auf ca. 150 mg/Nm3 (d.h. eine NO Minderung von über 45%) realisieren (für Hausmüll unterer Heizwert Hu = 7 bis 8 MJ/kg).

Weitere Untersuchungen haben gezeigt dass hohe Festbetttransportgeschwindigkeiten (d.h. größer den genannten 10 cm/min) nur im Bereich der vorderen Rosthälfte erforderlich sind. Die hinteren Rostbereiche können entsprechend langsamer betrieben werden so dass insgesamt genügend Zeit für den Ausbrand des Restkohlenstoffs in der Rostasche zur Verfügung steht.

### Versuchsbeispiel 4

Im Rahmen dieses Versuchsbeispiels erfolgte in der Versuchsanlage TAMARA eine Hausmüllverbrennung (Hu = 7 MJ/kg) bei einer Primärluftzahl von ca. 0.65 und einem Sauerstoffanteil im Abgas (nach dem Kessel) von konstant ca. 10 Vol.% trocken. Die Rostgeschwindigkeit in den einzelnen Rostbereichen ist im Gegensatz zu den vorgenannten Versuchsbeispielen nicht gleich; sie beträgt in den Brennbettbereichen **P₁** und **P₂** (vordere Rosthälfte) konstant bei 22 cm/min und wurde in der hinteren Rosthälfte mit jedem Brennbettbereich weiter abgesenkt (**P₃:** 11 cm/min, **P₄:** 5 cm/min). Die Verteilung der relativen Verweilzeiten des festen Brennstoffes in den vorgenannten Brennbettbereichen **P₁** bis **P₄** lag demzufolge bei 12 zu 12 zu 24 zu 52%. Durch diese Betriebsparameter erzielte man aufgrund der vorgenannten allgemeinen Zusammenhänge bereits eine niedrige Stickoxidbildungswerte von ca. 150 mg/Nm³, gemessen nach der Abgasausbrandzone und eine gut ausgebrannte Schlacke.

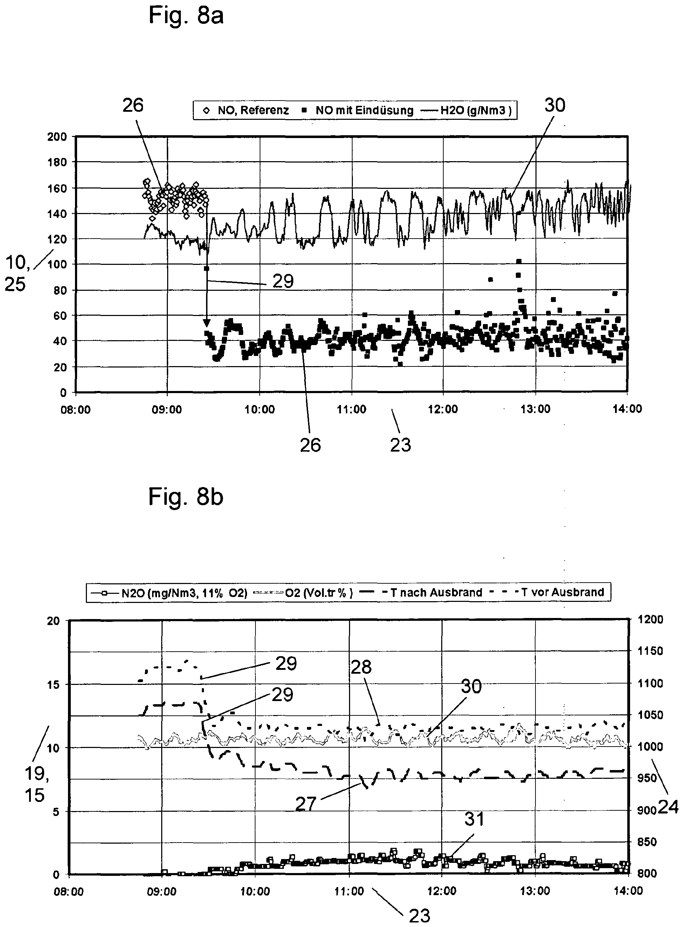

**Fig.8a** **und b** gibt über die Uhrzeit **23** die gemessenen Stickoxidkonzentrationen **10** in mg/Nm³ sowie der Wasserkonzentration **25** in g/Nm³ (**Fig.8a**) sowie die Lachgaskonzentrationen **19** in mg/Nm³ und die Temperaturen **24** in °C **(****Fig.8b****)** wieder. Um ca. 09:20 Uhr begann die Einleitung des Wasser/Gasstrahles über die Zweistoffdüse, ersichtlich in jeweils einer sprunghaften Absenkung **29** im Stickoxidkonzentrationsverlauf **26** sowie in den Temperaturverläufen **27** (nach Verlassen der Abgasausbrandzone) und **28** vor der Abgasausbrandzone.. Das Niveau des Abgasfeuchteverlaufs **30** im Abgas steigt aufgrund der geringen eingedüsten Wassermenge dagegen nur gering an. Bei der Regelung sinken die Temperaturen vor der Abgasausbrandzone auf Werte von ca. 1030° und nach der Abgasausbrandzone auf Werte von ca. 950°C.

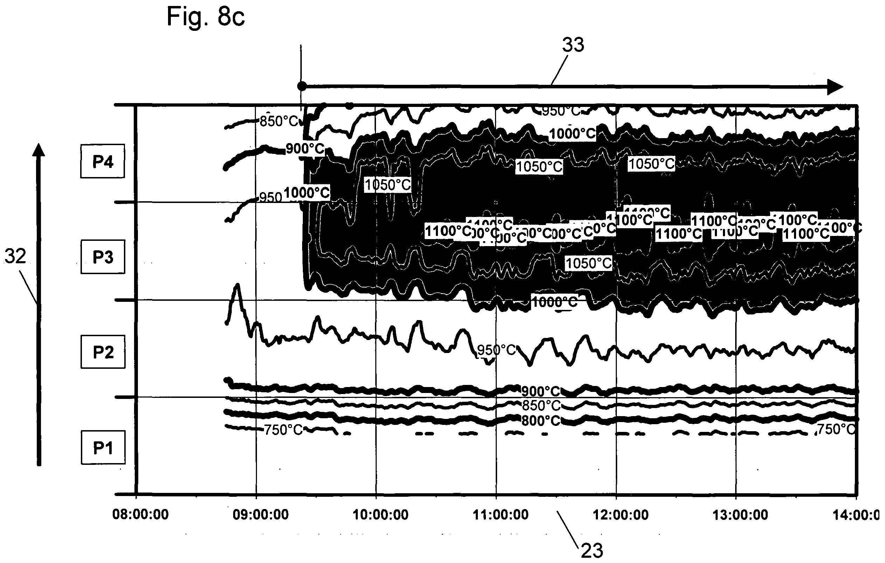

Ferner zeigt **Fig.8c** die axialen Temperaturverteilungen oberhalb des Brennbettes in den einzelnen Brennbettbereichen **P₁** bis **P₄,** dargestellt über die Uhrzeit **23** des Versuchs. Die Isothermen sind jeweils mit ihren Temperaturen angegeben. Die Temperaturen oberhalb der hinteren Rosthälfte des Brennbettes steigen mit Beginn und während der Eindüsung **33** deutlich an. Dieser Effekt hat positive Auswirkungen auf die Schlackequalität.

Die über die installierte Zweistoffdüse eingebrachte Wassermenge wird über eine Stickoxidmessung im Abgas nach Kessel (d.h. nach der Abgasausbrandzone) geregelt. Der Regelkreis ist so programmiert dass die maximale Wassermenge durch eine Mindesttemperatur von 950°C (vgl. Temperaturverlauf **27** in **Fig.8b**) in dem Brennraum begrenzt wird. Der Sollwert der Regelung ist auf 40 mg/Nm³ (vgl. Stickoxidkonzentrationsverlauf **16** in **Fig.8a**) eingestellt. Sofort nach Inbetriebnahme der Regelung sinkt der Stickoxidwert spontan ab (vgl. stufenförmige Absenkungen **29**)**.** Dieser Zustand wird über einen Zeitraum von mehr als 4h aufrechterhalten. Die mittlere Zunahme der Abgasfeuchte (Verlauf **30**) ist sehr niedrig im Mittel ca. 25 g/Nm3. Die Schwankungen der Abgasfeuchte während der Regelphase sind durch die eingestellten Regelparameter (PID-Regler) und die kurzeitigen Fluktuation des Brennstoffheizwertes verursacht und für die Effizienz der Energienutzung und NOₓ Minderungseffizienz nicht signifikant. Die erzielten extrem niedrigen Stickoxidwerte sind vergleichbar mit teuren SCR Verfahren und liegen weit unter den gesetzlichen Grenzwerten.

Nähert sich der Temperaturverlauf **27** der 950°C-Grenze, treten Spurenkonzentrationen von bis zu 2-3 mg/Nm3 auf. (vgl. **Fig.8b****:** Lachgaskonzentrationsverlauf **31**)**.** Die im beschriebenen Versuch gemessenen maximalen Lachgaskonzentrationen liegen jedoch im Bereich der Nachweisgrenze und sind vernachlässigbar.

Durch die Vermischung der Brenngase im Brennraum vor der Sekundärluftzugabe steigt die Gastemperatur trotz Wasserzugabe oberhalb des Brennbettes im Bereich der hinteren Rosthälfte und infolge der daraus resultierenden höheren Gasstrahlung auch im Brennbett im hinteren Bereich des Brennbettes deutlich an. Die Schlacke wird dort dadurch gut gesintert und damit inertisiert, so dass eine Verwendung dieser Reststoffe als Bauzuschlagstoff ohne eine aufwendige und damit teure Nachbehandlung begünstigt wird. Daher ist dieser positive Nebeneffekt bei der Abfallverbrennung vorteilhaft.

Die Konzentrationen insbesondere an Kohlenstoff (TOC), Chlorid aber auch Sulfat in der Schlacke sinken durch den Temperaturanstieg im Feuerraum und im Schlackebett der hinteren Brennbettzonen deutlich, was auch eine vorteilhafte Reduzierung der PCDD/F-Bildungsrate im der Schlacke bewirkt.

### Literatur:

[1] M.V.A.Horttanainen, J.J.Saastamoinen, P.J.Sarkomaa: Ignition Front Propagation in Packed Bed of Wood Particles; IFRF Combustion Journal, Article No. 200003, May 2000, ISSN 1562-479X
[2] H.Hunsinger, K.Jay, J.Vehlow: Formation of Pollutants during Municipal Solid Waste Incineration in a Grate Furnace under Different Air/Fuel Ratios; Proc. IT3'02 Conference, May 13-17, 2002, New Orleans, Louisiana
[3] H.Hunsinger, J.Vehlow, B.Peters, H.H.Frey: Performance of a Pilot Waste Incinerator under Different Air/Fuel Ratios; IT3'00 Conference, May 08-12, 2000, Portland, Oregon
[4] US 5.313.895

### Bezugszeichenliste

- 1: Brennbett
- 2: Feuerungsrost
- 3: Brennkammer
- 4: Einlass
- 5: Auslass
- 6: Abgasausbrandzone
- 7: Primärgaszufuhr
- 8: Verbrennung, Flamme
- 9: Sekundärgaseindüsung
- 10: Stickoxidkonzentration
- 11: mittlerer Heizwert
- 12: maximaler Heizwert
- 13: Zweistoffdüse
- 14: Strahl, Freistrahl
- 15: Sauerstoffkonzentration
- 16: Versuchszeit
- 17: Primärluftzahl
- 18: Rostvorschubgeschwindigkeit
- 19: Lachgaskonzentration
- 20: Abgastemperatur nach der Abgasausbrandzone
- 21: Messwerte mit Wasserzugabe
- 22: Referenzmesswerte
- 23: Uhrzeit
- 24: Temperatur
- 25: Wasserkonzentration trocken
- 26: Stickstoffkonzentrationsverlauf
- 27: Temperaturverlauf nach Verlassen der Abgasausbrandzone
- 28: Temperaturverlauf in der Abgasausbrandzone
- 29: stufenförmige Absenkung
- 30: Abgasfeuchteverlauf
- 31: Lachgaskonzentrationsverlauf
- 32: Brennstofftransportrichtung
- 33: Eindüsung

## Patentansprüche

1. Verfahren zur primärseitigen Minderung der Stickoxidbildung (NOx) und gleichzeitiger Minderung/Vermeidung von Distickstoffoxid (N₂O) und Ammoniak-Schlupf (NH₃) im Abgas eines zweistufigen Verbrennungsprozesses umfassend ein von einem sauerstoffhaltigen Primärgas (7) durchströmtes Brennbett (1) mit Festbettausbrandzone und einer nachgeschalteten Abgasausbrandzone (6), in die zusätzlich sauerstoffhaltiges Sekundärgas (9) eingebracht wird, **dadurch gekennzeichnet, dass**
der Heizwert des Abgases zwischen der Brennbettoberfläche und vor der Abgasausbrandzone vermindert wird, wobei sich ein mittlerer Heizwert im Abgas kleiner 1 MJ/m³ einstellt, die Abgastemperaturen im Abgas vor der Zugabe von Sekundärgas mindestens 970°C, nach Verlassen der Abgasausbrandzone (6) mindestens 950°C sowie im Abgas oberhalb des Brennbettes (1) der hinteren Rosthälfte mindestens 1000°C betragen.

2. Verfahren nach Anspruch 1, **dadurch gekennzeichnet, dass** der Verbrennungsprozess in einer Rostfeuerungsanlage, umfassend eine Brennkammer (3) mit dem Brennbett (1) mit mehreren hintereinander angeordneten Brennbettbereichen (P1, P2, P3, P4) mit jeweils einer individuellen Zufuhr des Primärgases (7), stattfindet.

3. Verfahren nach Anspruch 1 oder 2, **dadurch gekennzeichnet, dass** die Absenkung des Heizwertes des Abgases vor der Abgasausbrandzone (6) durch eine Vermischung eines oder mehrerer Wasser-GasStrahlen (14) mit den aus den einzelnen Brennbettbereichen (P1, P2, P3, P4) austretenden Abgasteilströmen oberhalb des Brennbetts (1) und vor der Zufuhr des Sekundärgases (9) erfolgt, wobei die Wasser/Gas-Strahlen im Brennraum alle Brennbettbereiche in axialer Richtung durchdringen.

4. Verfahren nach Anspruch 3, **dadurch gekennzeichnet, dass** die Wasser-Gas-Strahlen (14) aus einem Wasser-Luft-, einem Wasser-Abgas- oder einem Wasser-Wasserdampf-Gemisch bestehen.

5. Verfahren nach einem der Ansprüche 3 oder 4, **dadurch gekennzeichnet, dass** die Erzeugung des Strahls (14) mittels Zweistoffdüsen (13) mit einem Strahlwinkel kleiner 15° erfolgt.

6. Verfahren nach einem der Ansprüche 3 bis 5, **dadurch gekennzeichnet, dass** die über den Strahl (14) zugeführte Gasmenge 10% der gesamten Verbrennungsluftmenge nicht übersteigt.

7. Verfahren nach einem der Ansprüche 3 bis 5, **dadurch gekennzeichnet, dass** sich die über den Wasser/Gas-Strahl (14) zugeführte Wassermenge durch die geforderte NO-Konzentration im Abgas nach der Abgasausbrandzone (6) bestimmt und durch eine Mindesttemperatur von 950°C im Abgas nach der Abgasausbrandzone begrenzt wird.

8. Verfahren nach einem der vorgenannten Ansprüche, **dadurch gekennzeichnet, dass** die Absenkung des Heizwertes des Abgases vor der Abgasausbrandzone (6) über eine Einstellung der Primärgaszufuhr (7) in der Weise erfolgt, dass in der Festbettausbrandzone eine Stöchiometrie kleiner 1 eingestellt wird.

9. Verfahren nach Anspruch 8, **dadurch gekennzeichnet, dass** die Stöchiometrie vorzugsweise zwischen 0.7-0.9 eingestellt wird.

10. Verfahren nach einem der vorgenannten Ansprüche, **dadurch gekennzeichnet, dass** die Absenkung des Heizwertes des Abgases vor der Abgasausbrandzone (6) über eine Transportgeschwindigkeitseinstellung im Brennbett (1) erfolgt, wobei in einer vorderen Rosthälfte eine um mindestens 30 vorzugsweise 50% höhere Transportgeschwindigkeit als in der hinteren Rosthälfte vorliegt, wobei die gesamte Verweilzeit des Feststoffes auf dem Rost so bemessen ist, dass ein ausreichend hoher Ausbrand der Rostasche mit Restkohlenstoffkonzentrationen von unter 1 % gewährleistet ist.

## Claims

1. Method of reducing nitrogen oxide (NOx) formation on the primary side, and, at the same time, reducing/avoiding the formation of nitrous oxide (N₂O) and ammonia slip (NH₃) in the exhaust gas of a two-stage combustion process, comprising a fuel bed (1) through which an oxygenous primary gas (7) flows, with a fixed-bed burn-out zone and a downstream exhaust-gas burn-out zone (6), into which oxygenous secondary gas (9) is additionally introduced, **characterised in that**
the calorific value of the exhaust gas is reduced between the fuel bed surface and upstream of the exhaust-gas burn-out zone, wherein a mean calorific value in the exhaust gas of less than 1 MJ/m³ is set, the exhaust gas temperatures in the exhaust gas upstream of the introduction of secondary gas amount to at least 970 °C, after leaving the exhaust-gas burn-out zone (6) at least 950 °C, and in the waste gas above the fuel bed (1) in the rear grate half is at least 1000 °C.

2. Method according to claim 1, **characterised in that** the combustion process takes place in a grate firing system, comprising a combustion chamber (3) with the fuel bed (1) with a plurality of fuel bed regions (P1, P2, P3, P4) arranged one behind another, with in each case an individual introduction of primary gas (7).

3. Method according to claim 1 or 2, **characterised in that** the reduction of the calorific value of the exhaust gas upstream of the exhaust-gas burn-out zone (6) takes place by a mixing of one or more water-gas jets (14) with the exhaust gas part flows emerging from the individual fuel bed regions (P1, P2, P3, P4) above the fuel bed (1) and upstream of the introduction of the secondary gas (9), wherein the water/gas jets in the combustion chamber penetrate all the fuel bed regions in the axial direction.

4. Method according to claim 3, **characterised in that** the water-gas jets (14) consist of a water-air mixture, a water-exhaust gas mixture, and a water-water vapour mixture.

5. Method according to claims 3 or 4, **characterised in that** the production of the jet (14) takes place by way of two-substance nozzles (13) with a jet angle of less than 15°.

6. Method according to any one of claims 3 to 5, **characterised in that** the gas quantity introduced via the jet (14) does not exceed 10% of the total combustion air quantity.

7. Method according to any one of claims 3 to 5, **characterised in that** the water quantity introduced via the water-gas jet (14) is determined by the NO concentration conveyed in the exhaust gas downstream of the exhaust-gas burn-out zone (6), and is limited by a minimum temperature of 950 °C in the exhaust gas downstream of the exhaust-gas burn-out zone.

8. Method according to any one of the preceding claims, **characterised in that** the reduction of the calorific value of the exhaust gas upstream of the exhaust-gas burn-out zone (6) is effected by an adjustment of the primary gas introduction (7) in such a way that a stochiometry of less than 1 is adjusted in the fixed-bed burn-out zone.

9. Method according to claim 8, **characterised in that** the stochiometry is adjusted preferably to between 0.7-0.9.

10. Method according to any one of the preceding claims, **characterised in that** the reduction of the calorific value of the exhaust gas upstream of the exhaust-gas burn-out zone (6) takes place by way of a transport speed adjustment in the fuel bed (1), wherein, in a front grate half, a transport speed of at least 30%, and preferably 50%, higher than in the rear grate half pertains, wherein the total dwell time of the solid material on the grate is determined such that an adequately high burn-out of the grate ash is guaranteed, with a residual carbon concentration of less than 1%.

## Revendications

1. Procédé de réduction primaire des oxydes d'azote (NOx) et en même temps réduction / suppression les oxydes d'azote (N₂O) et le glissement de l'ammoniac (NH₃) dans les gaz de combustion d'un procédé de combustion en deux étapes avec un lit de combustion (1) traversé par un gaz primaire (7) contenant de l'oxygène, avec une zone de combustion de lit, fixe, et une zone de combustion des gaz de combustion (6) en aval, dans laquelle on introduit en plus du gaz secondaire (9) contenant de l'oxygène,
procédé **caractérisé en ce qu'**
on réduit la valeur calorifique des gaz de combustion entre la surface du lit de combustible et avant la zone de fin de combustion des gaz de combustion, de façon qu'il s'établisse une valeur calorifique moyenne dans les gaz de combustion qui est inférieure à 1 MJ/m³, que la température des gaz de combustion avant l'adjonction du gaz secondaire soit à la température d'au moins 970°C, à la sortie de la zone de combustion des gaz de combustion (6), au moins 950°C ainsi dans les gaz de combustion au-dessus du lit de combustible (1), de la moitié arrière de la grille,
la valeur moyenne étant d'au moins 1000°C.

2. Procédé selon la revendication 1,
**caractérisé en ce que**
le procédé de combustion se fait dans une installation de combustion sur grille comportant une chambre de combustion (3) avec le lit de combustion (1) à plusieurs plages de lit de combustible (P1, P2, P3, P4) situées l'une derrière l'autre et avec chaque fois une alimentation individuelle de gaz primaire (7).

3. Procédé selon la revendication 1 ou 2,
**caractérisé en ce que**
l'abaissement de la valeur calorifique des gaz de combustion en amont de la zone de combustion des gaz de combustion (6) se fait en mélangeant un ou plusieurs jets d'eau et de gaz (14) avec des jets partiels de gaz de combustion sortant des différentes zones de lit de combustible (P1 ; P2, P3, P4) au-dessus du lit de combustible (1) et en amont de l'alimentation du gaz secondaire (9), les jets d'eau / gaz traversant axialement toutes les zones du lit de combustible dans la chambre de combustion.

4. Procédé selon la revendication 3,
**caractérisé en ce que**
les jets d'eau-gaz (14) se composent d'un mélange eau-air, eau- gaz de combustion ou eau-vapeur d'eau.

5. Procédé selon l'une des revendications 3 ou 4,
**caractérisé en ce qu'**
on génère le jet (14) avec des buses bi-matière (13) et un angle de jet inférieur à 15°.

6. Procédé selon l'une des revendications 3 à 5,
**caractérisé en ce que**
le mélange gazeux fourni par les jets (14) ne transmet que 10% de la quantité d'air totale servant à la combustion.

7. Procédé selon l'une des revendications 3 à 5,
**caractérisé en ce que**
la quantité d'eau arrivant par le jet eau / gaz (14) est définie par la concentration-NO requise dans les gaz de combustion après la zone de combustion des gaz de combustion (6) ou limitée par une température minimale de 950°C dans les gaz de combustion en aval de la zone de combustion des gaz de combustion.

8. Procédé selon l'une des revendications précédentes,
**caractérisé en ce qu'**
on abaisse la valeur calorifique des gaz de combustion en amont de la zone de combustion des gaz de combustion (6) en réglant l'alimentation en gaz primaire (7) de façon à régler la zone de combustion du lit solide, à une stoechiométrie inférieure à 1.

9. Procédé selon la revendication 8,
**caractérisé en ce qu'**
on règle une stoechiométrie, de préférence entre 0,7 et 0,9.

10. Procédé selon l'une des revendications précédentes,
**caractérisé en ce qu'**
on abaisse la valeur calorifique des gaz d'échappement avant la zone de combustion des gaz de combustion (6) par la vitesse de transport dans le lit de combustible (1), et dans la moitié avant de la grille, on a une vitesse de transport au moins supérieure de 30% et de préférence 50% par rapport à la moitié arrière de la grille, l'ensemble du temps de séjour du produit solide sur la grille étant dimensionné pour une combustion finale des couches de la grille suffisamment élevée pour avoir des concentrations résiduelles en carbone inférieures à 1%.
